# EUROPÄISCHE PATENTSCHRIFT

(11) **EP 1 012 117 B1**
(45) Veröffentlichungstag und Bekanntmachung des Hinweises auf die Patenterteilung: **17.10.2001**
(21) Anmeldenummer: 98940220.1
(22) Anmeldetag: 14.07.1998
(51) Int. Cl.: C02F 1/32, B01D 29/31

(54) **EINRICHTUNG ZUM ENTKEIMEN UND FILTRIEREN VON WASSER, WELCHES EINE SANITÄREINRICHTUNG DURCHSTRÖMT**
DEVICE FOR STERILIZING AND FILTERING WATER WHICH FLOWS THROUGH A SANITARY DEVICE
DISPOSITIF PERMETTANT DE DEGERMER ET DE FILTRER L'EAU QUI S'ECOULE PAR UN EQUIPEMENT SANITAIRE

(30) Priorität: 22.08.1997 DE 19736633
(43) Veröffentlichungstag der Anmeldung: 28.06.2000
(73) Patentinhaber: HANSA METALLWERKE AG, 70567 Stuttgart (DE)
(72) Erfinder: KUNKEL, Horst, D-70499 Stuttgart (DE)
(74) Vertreter: Ostertag, Ulrich, Dr.
(86) Internationale Anmeldenummer: EP9804357
(87) Internationale Veröffentlichungsnummer: WO9910279

(56) Entgegenhaltungen:
- EP-A- 0 531 817
- US-A- 5 540 848
- PATENT ABSTRACTS OF JAPAN vol. 004, no. 135 (C-025), 20. September 1980 & JP 55 086509 A (NEC CORP), 30. Juni 1980

## Beschreibung

Die Erfindung betrifft eine Einrichtung zum Entkeimen und Filtrieren von Wasser, welches eine Sanitäreinrichtung durchströmt, mit
a) einem Gehäuse, welches einen Einlaß und einen Auslaß für das Wasser aufweist;
b) einer in einem Behandlungsraum innerhalb des Gehäuses angeordneten Filtervorrichtung, die den Behandlungsraum in mindestens zwei Teilräume unterteilt und von dem Wasser auf dem Wege zwischen dem Einlaß und dem Auslaß des Gehäuses durchtreten werden muß;
c) einer UV-Lampe, die innerhalb des Gehäuses angeordnet ist und deren Strahlung auf das durchströmende Wasser und die Filtervorrichtung gerichtet ist.

In den letzten Jahren sind die Gefahren, die von mit Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher eine erhöhte Bedeutung beigemessen. In diesem Zusammenhang wurde von Versuchen berichtet, strömendes Wasser durch die Bestrahlung mit UV-Licht zu entkeimen, dessen Wellenlänge geeignet ist, im Wasser mitgeführte Mikroorganismen abzutöten. Zur Verzögerung der Verweilzeit dieser Mikroorganismen im Bereich der UV-Lampe wurden Filtervorrichtungen eingesetzt, von denen die Mikroorganismen zurückgehalten wurden. Diese Filtervorrichtungen unterteilten den Behandlungsraum in nur zwei Teilräume, von denen der eine mit dem Einlaß der Einrichtung, der andere mit dem Auslaß der Einrichtung verbunden war. Hierbei ergab sich eine verhältnismäßig geringe durchströmte Oberfläche der Filtervorrichtung, was nicht nur einen verhältnismäßig kleinen Durchsatz an Wasser zur Folge hatte sondern auch zu verhältnismäßig kleinen Standzeiten der Filtervorrichtung führte.

In der US 5 540 848 A ist eine in einem Kanister angeordnete Wasserentkeimungseinrichtung mit einer UV-Lampe beschrieben, die vom zu entkeimenden Wasser umströmt wird. Dabei durchtritt das Wasser auch einen Filterkörper der oben beschriebenen Art, der einen Teil der UV-Lampe hülsenformig umgibt.

Bei der für einen Swimmingpool konzipierten Wasserentkeimungseinrichtung der EP 0 531 817 A ist eine Reihe von verschiedenen Reinigungseinrichtungen vorgesehen. In einer Desinfektionseinrichtung wird Wasser durch Bestrahlung mit einer UV-Lampe entkeimt. Als Filtereinrichtung ist unter anderem eine Einrichtung mit einer Mehrzahl von Filtern vorgesehen, die ihrerseits in eine Mehrzahl von Teilräumen unterteilt und in einem Gehäuse angeordnet sind. Bei einer Ausführungsform liegt die UV-Lampe innerhalb einer konzentrischen Anordnung von Filtern, wobei der außen liegende Filter einen Keramik-Filterkörper umfaßt.

Diese bekannten Einrichtungen sind vor den eigentlichen Wasser-Entnahmeorten (Zapfstellen) angeordnet.

Aufgabe der vorliegenden Erfindung ist es daher, eine Einrichtung der eingangs genannten Art so auszugestalten, daß eine zuverlässige Entkeimung des Wassers am Ort der Wasserentnahme gewährleistet wird.

Diese Aufgabe wird erfindungsgemäß dadurch gelöst, daß
d) das Gehäuse so dimensioniert ist, daß die Einrichtung in den Wasserkanal einer sanitären Armatur einsetzbar ist;
e) die Filtervorrichtung ein für die UV-Strahlung durchlässiger Sinterkörper ist;
f) die Teilräume des Behandlungsraumes in zwei Sätze unterteilt sind, von denen mindestens einer eine Mehrzahl von Teilräumen umfaßt;
g) die Teilräume des einen Satzes mit dem Einlaß des Gehäuses und die Teilräume des anderen Satzes mit dem Auslaß des Gehäuses in Verbindung stehen,
   wobei
h) die Teilräume des einen Satzes von den Teilräumen des anderen Satzes durch filteraktive Bereiche der Filtervorrichtung voneinander getrennt sind.

Die Dimensionierung der Wasserentkeimungseinrichtung derart, daß ein Einsetzen von dieser in eine sanitäre Armatur ermöglicht ist, gewährleistet eine sichere Entkeimung des Wassers bis hin zum Entnahmeort, so daß das entnommene Wassers zuverlässig entkeimt wird.

Die erforderliche Kompaktheit der Einrichtung erfordert eine Gestaltung der Reinigungskomponenten derart, daß bei kleiner Gesamtbauweise der Durchfluß erhöht und die Standzeit der Filtervorrichtung verlängert wird. Erfindungsgemäß wird also auf der Einlaßseite und/oder der Auslaßseite der Filtervorrichtung eine Vielzahl von Teilräumen, eingesetzt. Diese Vielzahl von Teilräumen erhöht die wirksame Oberfläche der Filtervorrichtung mit der Folge, daß ein größerer Durchsatz möglich wird. Außerdem kann die Filtervorrichtung mit größerer aktiver Filteroberfläche mehr Verunreinigungen aufnehmen, bevor sie erschöpft ist und ausgetauscht werden muß.

Die Ausbildung der Filtervorrichtung als für die UV-Strahlung durchlässiger Sinterkörper gewährleistet einerseits eine gute Filterwirkung und andererseits eine Entkeimungswirkung durch die UV-Strahlung auch innerhalb der Filtervorrichtung.

Wenn die Teilräume mindestens eines der beiden Sätze an einer Mantelfläche der Filtervorrichtung entlang geführt sind, ist die Herstellung der Filtervorrichtung besonders einfach: Es braucht nur eine entsprechende Oberflächenprofilierung vorgesehen zu werden, die beispielsweise die Form von achsparallelen Rillen oder Nuten in der Mantelfläche der Filtervorrichtung besitzt.

Bei diesem Konstruktionsprinzip gibt es wieder zwei zu unterscheidende bevorzugte Varianten: Entweder sind die Teilräume mindestens eines Satzes zwischen der äußeren Mantelfläche der Filtervorrichtung und der Innenfläche des Gehäuses ausgebildet: dann ist die Herstellung der Filtervorrichtung besonders einfach, da die erforderlichen Rillen oder Nuten an der Außenmantelfläche leicht einzubringen sind. Oder die Teilräume mindestens eines Satzes sind zwischen einer inneren Mantelfläche der Filtervorrichtung und dem Leuchtkörper der UV-Lampe ausgebildet: dann ist gewährleistet, daß das diese Teilräume durchströmende Wasser immer - auch bei stark zugesetztem Filter - von den UV-Strahlen erreicht wird.

Die Teilräume mindestens eines Satzes können auch als Durchgangsbohrungen der Filtervorrichtung ausgebildet sein. Auf diese Weise ist automatisch die Forderung an die Teilräume erfüllt, daß auf dem Weg zwischen den Teilräumen des einen Satzes und den Teilräumen des anderen Satzes filteraktives Material durchtreten werden muß.

Besonders bevorzugt wird diejenige Ausgestaltung der Erfindung, bei welcher die Teilräume an gegenüberliegenden Enden jeweils durch eine Zwischenplatte begrenzt sind, wobei jede Zwischenplatte Durchtrittsöffnungen aufweist, die mit einem der beiden Sätze von Teilräumen in Verbindung stehen. Dann können nämlich die geometrischen Profile an der Filtervorrichtung, welche die Teilräume an einer Seite begrenzen, über die gesamte Filtervorrichtung in axialer Richtung hinweg konstant ausgebildet werden. Die Zuordnung der Teilräume zu den beiden Sätzen erfolgt in einfacher Weise durch die beiden Zwischenplatten, welche jeweils einen der beiden Sätze von Teilräumen verschließen und den jeweils anderen Satz von Teilräumen entweder mit dem Einlaß oder mit dem Auslaß der Einrichtung verbinden.

Ausführungsbeispiele der Erfindung werden nachfolgend anhand der Zeichnung näher erläutert; es zeigen
- Figur 1:: eine Axialschnitt durch eine Einrichtung zum Entkeimen und Flitrieren von Wasser, die in einer Sanitärarmatur untergebracht werden kann, gemäß Linie I-I der Figuren 2 bis 4;
- Figur 2:: einen Schnitt gemäß Linie II-II von Figur 1;
- Figur 3:: einen Schnitt gemäß Linie III-III von Figur 1;
- Figur 4:: einen Schnitt gemäß Linie IV-IV von Figur 1;
- Figuren 5 bis 7:: Schnitte, ähnlich den Figuren 2 bis 7, durch ein zweites Ausführungsbeispiel;
- Figuren 8 bis 10:: Schnitte, ähnlich den Figuren 2 bis 4, durch ein drittes Ausführungsbeispiel der Erfindung.

Die in der Zeichnung dargestellte Einrichtung zur Entkeimung und Filtrierung von Wasser ist dazu bestimmt, in einen Wasserkanal einer sanitären Armatur eingesetzt zu werden. Alle Abmessungen sind also derart, daß sie in einem solchen Durchströmungskanal Platz finden. Die Einrichtung, die insgesamt mit dem Bezugszeichen 1 gekennzeichnet ist, umfaßt einen im wesentlichen zylindrischen Gehäusemantel 2, welcher an den gegenüberliegenden Stirnseiten durch einen Boden 3 und einen Deckel 4 verschlossen ist. Die Verbindung zwischen dem Gehäusemantel 2 und dem Boden 3 bzw. dem Deckel 4 geschieht bei dem dargestellten Ausführungsbeispiel mit Hilfe von Gewinden 5, 6, so daß der Innenraum des Gehäusemantels 2 nach Abnehmen dieser Bauteile zugänglich ist.

In einer Ausnehmung 7 an der Innenseite des Bodens 3 ist mit Hilfe von Schrauben 8, 9 ein Anschlußsockel 10 befestigt, welcher der Aufnahme des Sockelbereiches 13 und damit und der Stromversorgung einer langgestreckten UV-Lampe 12 dient und über Leitungen 11 mit einer externen, nicht dargestellten Stromquelle verbunden ist. Beim dargestellten Ausführungsbeispiel ist der Anschlußsockel 10 aus hier nicht näher interessierenden Gründen in zwei Teile unterteilt, die lösbar ineinander gesteckt und mit zwei Spulen, die jeweils in den beiden Teilen einander benachbart untergebracht sind, induktiv elektrisch gekoppelt sind.

Im Innenraum des Gehäuses 2, 3, 4 ist eine erste Zwischenplatte 17 fixiert, die von unten her in das Gehäuse 2, 3, 4 eingeschoben ist, wobei zur Bestimmung der Drehlage eine radial vorstehende Rippe 34 in eine Nut 35 an der Innenwandung des Gehäusemantels 2 eingeführt ist. Die erste Zwischenplatte 17 liegt nach oben hin an einer kleinen Stufe 36 der Innenwandung des Gehäusemantels 2 an. Nach unten hin stützt sich die erste Zwischenplatte 17 über ein Abstandsstück 37 an dem Anschlußsockel 10 ab.

Durch die erste Zwischenplatte 17 wird der Innenraum des Gehäuses 2, 3, 4 in einen Zuströmraum 18 und in einen Behandlungsraum 19 unterteilt. Der Zuströmraum 18 umgibt im wesentlichen den Anschlußsockel 10, während der Behandlungsraum 19 den Leuchtkörper 14 der UV-Lampe 12 umgibt. In einer seitlichen, den zylindrischen Gehäusemantel 2 durchsetzenden Öffnung 38 ist ein abgewinkelter Anschlußstutzen 39 eingeschweißt, welcher der Zufuhr von Wasser in den Zuströmraum 18 des Gehäuses 2, 3, 4 dient. Im Deckel 4 ist eine achsparallele Bohrung 40 vorgesehen, in welche ein Auslaufstutzen 41 eingeschraubt ist, über welchen das gereinigte Wasser die Einrichtung 1 wieder verläßt.

Im oberen Bereich des Gehäuses 2, 3, 4 ist, unterhalb des Deckels 4, eine zweite Zwischenplatte 42 in ähnlicher Weise befestigt, wie dies oben für die erste Zwischenplatte 17 beschrieben ist. Allerdings ist diese zweite Zwischenplatte 42 von oben her in das Gehäuse 2, 3, 4 eingeführt. Sie wird vom Deckel 4 gegen eine Stufe 43 an der Innenwandung des Gehäusemantels 2 angedrückt.

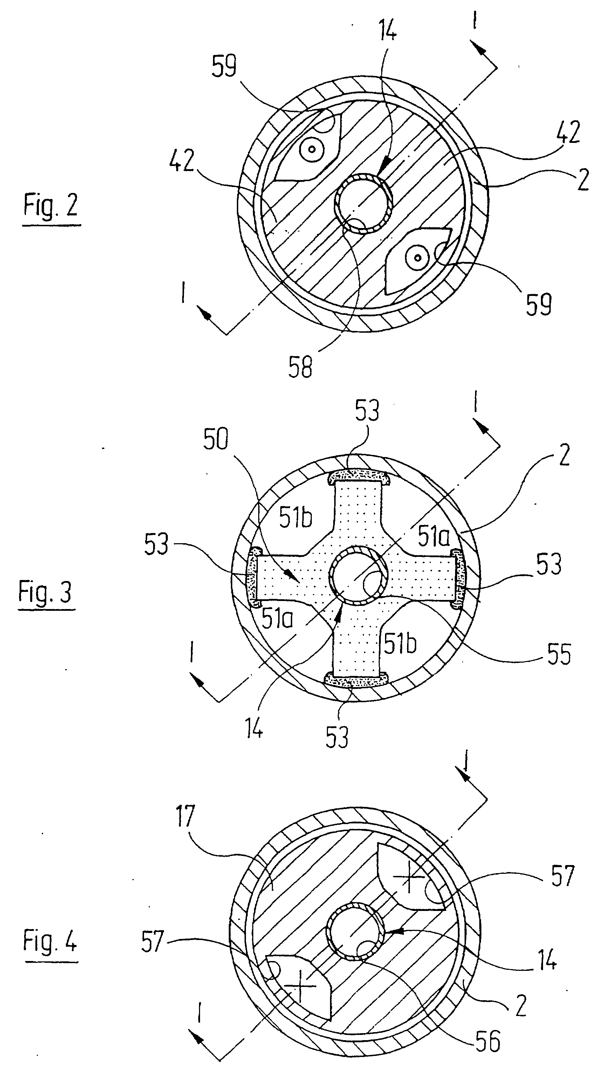

In dem zwischen den beiden Zwischenplatten 17 und 42 liegenden Bereich ist der Leuchtkörper 14 der UV-Lampe 12 von einer Filtervorrichtung umgeben, die insgesamt das Bezugszeichen 50 trägt. Die Filtervorrichtung besteht aus einem Sinterkörper 50 aus geeignetem Material, der die in Figur 3 dargestellte Querschnittskonfiguration aufweist: Er hat im wesentlichen die Form eines Kreuzes, welches den Innenraum des Gehäuses 2, 3, 4 in vier Teilräume 51a, 51b unterteilt. Zur Abdichtung dieser vier Teilräume 51a, 51b liegen die Längsränder des Sinterkörpers 50 über Formdichtungen 53 an der Innenwandung des Gehäusemantels 2 an. Der gesamte Sinterkörper 50 ist von einer axialen Durchgangsbohrung 55 durchzogen, in welcher der Leuchtkörper 14 der UV-Lampe 12 aufgenommen ist.

Wie der Figur 4 zu entnehmen ist, besitzt die erste Zwischenplatte 17 eine mittlere Durchgangsöffnung 56, welche den unteren Bereich des Leuchtkörpers 14 der UV-Lampe 12 aufnimmt, sowie ringsegmentförmige Öffnungen 57, welche in montiertem Zustand mit den einander gegenüberliegenden Teilräumen 51a innerhalb des Gehäuses 2, 3, 4 kommunizieren.

In ähnlicher Weise ist, wie der Figur 2 zu entnehmen ist, die zweite Zwischenplatte 42 mit einer mittleren Durchgangsöffnung 58 versehen, in welche das obere Ende des Leuchtkörpers 14 der UV-Lampe 12 eingeschoben ist. Zwei ringsegmentähnliche Öffnungen 59 kommunizieren auf der einen Seite mit den einander gegenüberliegenden Teilräumen 51b innerhalb des Gehäuses 2, 3, 4 und auf der anderen Seite mit einem Ringraum 60, der seinerseits mit dem Auslaufstutzen 41 in Verbindung steht.

In eine mittlere Ausnehmung 62 des Deckels 40 schließlich ist ein elastisches Polster 61 eingesetzt, in welches das obere Ende des Leuchtkörpers 14 der UV-Lampe 12 eingedrückt ist, so daß die UV-Lampe 12 innerhalb der Einrichtung 1 schonend fixiert ist.

Die oben beschriebene Einrichtung 1 arbeitet wie folgt:

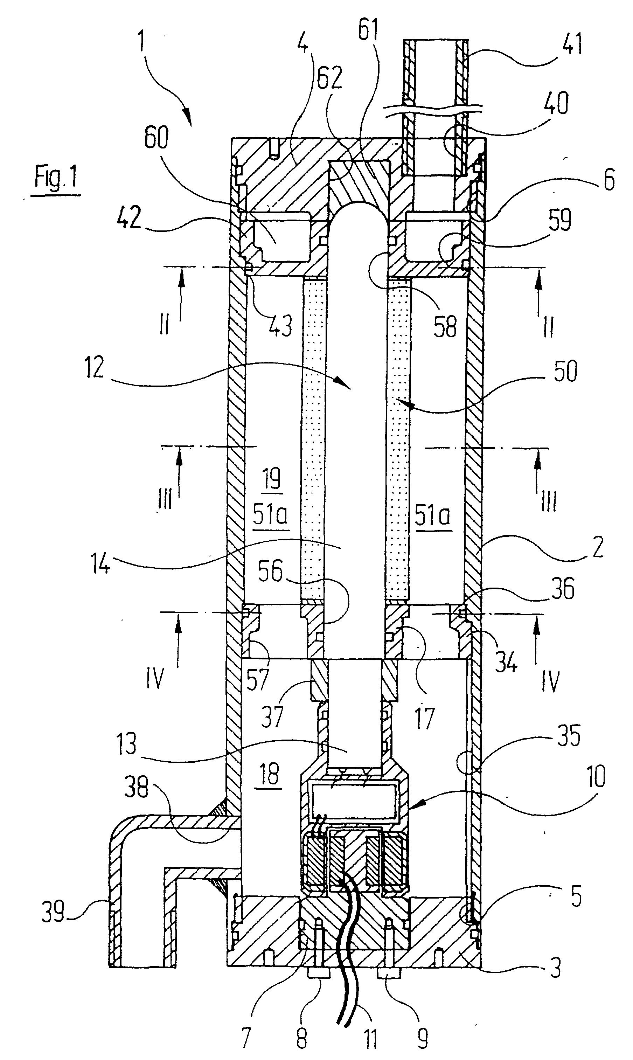

Wird die Sanitäreinrichtung, beispielsweise eine Auslaufarmatur, in deren Durchströmungskanal die Einrichtung 1 eingebaut ist, geöffnet, so fließt Wasser über den Anschlußstutzen 39 in den Zuströmraum 18 innerhalb des Gehäuses 2, 3, 4 ein. Die UV-Lampe 12 wird eingeschaltet. Das in den Zuströmraum 18 gelangende Wasser fließt von dort über die ringsegmentähnlichen Öffnungen 57 in der ersten Zwischenplatte 17 in die Teilräume 51a des Behandlungsraumes 19, die in diesem Sinne einen ersten "Satz" von Teilräumen bilden. Es durchtritt von dort die "Schenkel" bzw. "Arme" des im Querschnitt kreuzförmigen Sinterkörpers 50 und gelangt so in die benachbarten Teilräume 51b, die in diesem Sinne einen zweiten "Satz" von Teilräumen bilden. Dabei werden die in dem Wasser enthaltenen auszufiltrierenden Teilchen, insbesondere aber Mikroorganismen wie Amöben und ähnliche Einzeller, von dem Sinterkörper 50 zurückgehalten. Das so gereinigte Wasser fließt über die Teilräume 51b des Behandlungsraumes 19 in Figur 1 nach oben, durch die ringsegmentähnlichen Öffnungen 59 der zweiten Zwischenplatte 42 und durch den Ringraum 60 zum Auslaßstutzen 41 ab und von dort zum nicht dargestellten Auslauf der Sanitäreinrichtung.

Beim Durchgang durch-die Behandlungskammer 19 ist das Wasser den desinfizierenden Strahlen der UV-Lampe 12 ausgesetzt. Die in dem Filterkörper 50 abgeschiedenen Mirkoorganismen werden unter dem Einfluß der UV-Strahlung abgetötet.

Soll Zugang zu dem Sinterkörper 50 gewonnen werden, z.B. wenn dieser sich nach einer bestimmten Betriebszeit mit abgeschiedenen Verunreinigungen zugesetzt hat, kann dies entweder dadurch geschehen, daß der Boden 3 vom Gehäusemantel 2 der Einrichtung 1 abgeschraubt und der Anschlußsockel 10 mit der UV-Lampe 12 nach unten herausgezogen wird. Dann kann auch die erste Zwischenplatte 17 nach unten entfernt werden, woraufhin der Sinterkörper 50 zugänglich ist.

Alternativ kann der Sinterkörper 50 auch von oben her erreicht werden, indem der Deckel 4 abgeschraubt wird. Dann kann die zweite Zwischenplatte 42 nach oben herausgenommen werden, worauf der Sinterkörper 50 freiliegt. Dieser kann nun nach oben in der Sicht der Figur 1 über den Leuchtkörper 14 der UV-Lampe 12 abgezogen werden.

Die Wiedermontage geschieht in beiden Fällen in umgekehrter Reihenfolge.

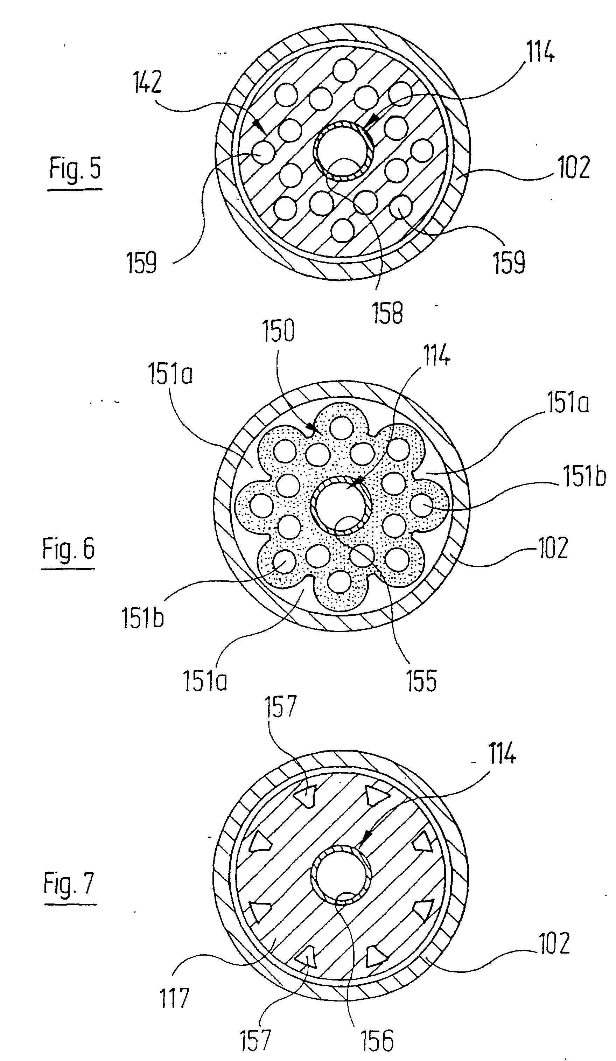

Bei dem oben anhand der Figuren 1 bis 4 beschriebenen Ausführungsbeispiel gab es innerhalb des Behandlungsraumes 19 zwei Sätze von jeweils zwei, insgesamt also vier "Teilräume" 51a und 51b, von denen zwei, nämlich die zum ersten Satz gehörenden Teilräume 51a, verschmutztes, zu entkeimendes Wasser enthielten und mit dem Zulaufraum 18 in Verbindung standen, während zwei weitere, nämlich die zum zweiten Satz gehörenden Teilräume 51b und 51d, filtriertes Wasser nach dem Durchtritt durch den Filterkörper 50 zum Auslaufstutzen 41 hin abführten. Dieses Konzept der Mehrzahl von Teilräumen in zwei Sätzen, von denen der eine der Zufuhr verschmutzten Wassers und der andere der Abfuhr filtrierten Wassers dient, läßt sich noch konsequenter fortführen, indem statt zweimal zwei Teilräumen eine größere Vielzahl von Teilräumen vorgesehen wird. Ein Ausführungsbeispiel hierfür ist in den Figuren 5 bis 7 dargestellt, welche ebenfalls als Schnitte gemäß den Linien II-II, III-III, IV-IV, allerdings bei geändertem Filterkörper, zu verstehen sind. Entsprechend Teile in den Figuren 5 bis 7 sind daher mit demselben Bezugszeichen wie in den Figuren 2 bis 4, zuzüglich 100, gekennzeichnet.

In den Figuren 5 bis 7 ist wiederum der zylindrische Gehäusemantel 102 sowie der Leuchtköper 114 der UV-Lampe zu erkennen, Bauteile die gegenüber den Figuren 2 bis 4 unverändert geblieben sind.

Der in Figur 6 dargestellte Querschnitt des Sinterkörpers 150 ähnelt einer "Blüte". Er weist eine Umfangskontur auf, die aus einer Vielzahl halbkreisförmiger Bögen zusammengesetzt ist und mit der Innenfläche des Gehäusemantels 102 eine entsprechende Vielzahl von Teilräumen 151a begrenzt. Die radial äußersten Bereiche der halbkreisförmigen Bögen, aus denen die Umfangskontur des Sinterkörpers 150 zusammengesetzt ist, reichen zwar sehr nahe an die Innenwand des Gehäusemantels 102 heran, sind aber gegen diese nicht abgedichtet. In diesem Sinne stehen alle Teilräume 151a beim Ausführungsbeispiel der Figuren 5 bis 7 miteinander in Verbindung.

Der Innenraum des Sinterkörpers 150 zwischen der mittleren Durchgangsbohrung 155, welche den Leuchtkörper 114 aufnimmt, und der erwähnten Außenkontur, wird von einer Vielzahl achsparalleler Durchgangsbohrungen 151b durchzogen. Diese Durchgangsbohrungen 151b liegen auf konzentrischen Kreisen und sind im wesentlichen über den Querschnitt des Sinterkörpers 150 gleichmäßig verteilt.

Die in Figur 7 dargestellte erste Zwischenplatte 117 weist im radial außenliegenden Bereich eine Mehrzahl von zwickelförmigen Durchtrittsöffnungen 157 auf, die in montiertem Zustand mit den Teilräumen 151a zwischen dem Außenrand des Sinterkörpers 150 und der Innenwand des Gehäusemantels 102 in Verbindung stehen. Diese Teilräume 151a bilden also in der hier verwendeten Terminologie einen ersten "Satz". Analog hierzu umfaßt die in Figur 5 dargestellte zweite Zwischenplatte 142 eine Vielzahl von Durchgangsbohrungen 159, die in Figur 1 nach unten mit den Durchgangsbohrungen 151b des Sinterkörpers 150 und an der nach oben zeigenden Seite mit dem Ringraum 60 (Figur 1) und damit mit dem Auslaufstutzen 41 in Verbindung stehen. Die Durchgangsbohrungen 151b bilden so einen zweiten Satz.

Im Betrieb dieser Einrichtung strömt das zu filtrierende Wasser durch die Durchtrittsöffnungen 157 der ersten Zwischenplatte 117 in den ersten Satz von Teilräumen 151a der Behandlungskammer, durchtritt von dort aus das filteraktive Material des Sinterkörpers 150, gelangt in eine der mehreren zum zweiten Satz gehörenden Durchgangsbohrungen 151b des Sinterkörpers 150 und fließt über die Durchgangsbohrungen 159 der zweiten Zwischenplatte 142 aus. Durch die verhältismäßig große innere Oberfläche, welche durch die Vielzahl von Teilräumen 151a und 151b innerhalb und außerhalb des Sinterkörpers 150 bereitgestellt wird, hat der Sinterkörper 150 eine lange Lebensdauer. Die Drosselung der Wasserströmung ist gering.

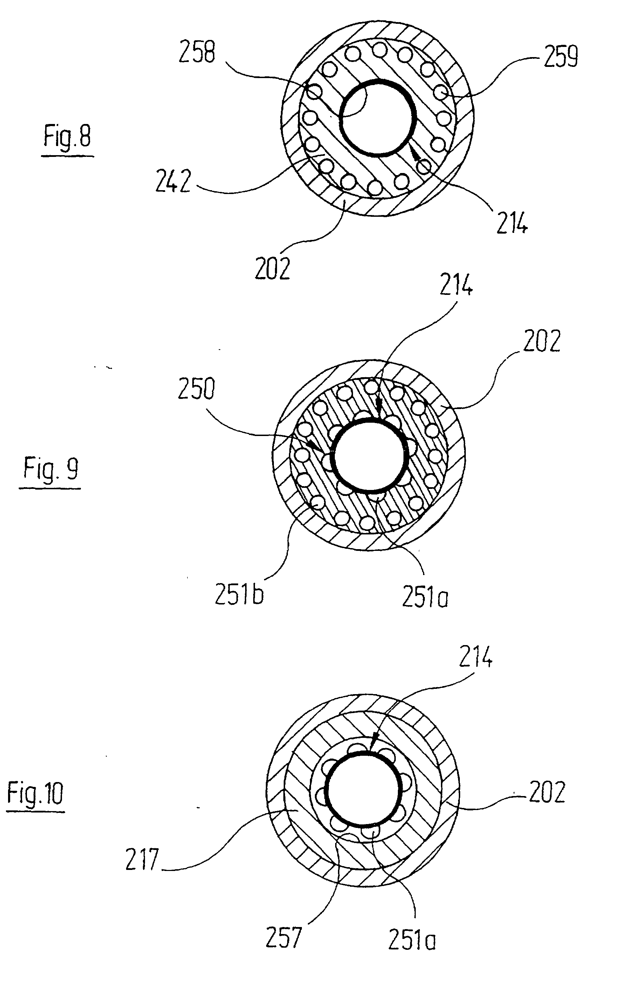

Während bei dem in den Figuren 5 bis 7 dargestellten Ausführungsbeispiel das zuströmende, also das zu filtrierende, Wasser dem Sinterkörper 150 am Außenumfang zugeführt wurde, geschieht dies beim Ausführungsbeispiel nach den Figuren 8 bis 10 am Innenumfang. Im übrigen ähneln auch diese Figuren stark dem in den Figuren 2 bis 4 dargestellten Ausführungsbeispiel. Deshalb wurden entsprechende Teile mit demselben Bezugszeichen, zuzüglich 200, gekennzeichnet.

In den Figuren 8 bis 10 sind der Gehäusemantel 202 und der Leuchtkörper 214 der UV-Lampe wieder identisch wie bei den vorher beschriebenen Ausführungsbeispielen.

Der Sinterkörper 250 jedoch, dessen Querschnitt in Figur 9 gezeigt ist, weist an seiner inneren, dem Leuchtkörper 214 zugewandten Mantelfläche eine Vielzahl von im Querschnitt halbkreisförmigen, rinnenartigen Ausnehmungen 251a auf. Radial weiter außen wird der Sinterkörper 250 durch eine Vielzahl von achsparallelen Durchgangsbohrungen 251b durchzogen. Zwei dieser Durchgangsbohrungen 251b (in Figur 9 links und rechts) sind im Durchmesser etwas kleiner gehalten, um so eine korrekte Winkelorientierung des Sinterkörpers 250 innerhalb des Gehäuses zu erleichtern.

Wie Figur 10 zeigt, ist die erste Zwischenplatte 217 ringförmig gestaltet, wobei ihr Außendurchmesser etwa dem Innendurchmesser des Gehäusemantels 202 entspricht und der Durchmesser der inneren Öffnung 257 so gewählt ist, daß die Teilräume 251a zwischen dem Innenumfang des Sinterkörpers 250 und dem Leuchtkörper 214 der UV-Lampe angeströmt werden können. Auf diese Weise werden diese Teilräume 251a zu einem "Satz" zusammengefaßt.

Die in Figur 8 dargestellte zweite Zwischenplatte 242 weist neben der mittleren Durchgangsöffnung 258 für den Leuchtkörper 214 im Umfangsbereich eine Vielzahl von Durchgangsbohrungen 259 auf, die in montiertem Zustand einerseits mit den Durchgangsbohrungen 251b des Sinterkörpers 250 (Figur 9) und andererseits mit dem Ringraum kommunizieren, welcher auf dem Weg zum Auslaßstutzen liegt. Die Durchgangsbohrungen 251b des Sinterkörpers 250 werden so zu Mitgliedern eines zweiten Satzes von Teilräumen.

Die Ausführungsform nach den Figuren 8 bis 10 hat gegenüber derjenigen der Figuren 5 bis 7 den Vorteil, daß das zuströmende Wasser unabhängig vom Beladungszustand des Sinterkörpers 250 immer einen Weg in unmittelbarer Nähe des Leuchtkörpers 214 zurücklegt und daher immer direkt von der von diesem Leuchtkörper 214 ausgehenden UV-Strahlung erreicht wird.

## Patentansprüche

1. Einrichtung zum Entkeimen und Filtrieren von Wasser, welches eine Sanitäreinrichtung durchströmt, mit
a) einem Gehäuse, welches einen Einlaß und einen Auslaß für das Wasser aufweist;
b) einer in einem Behandlungsraum innerhalb des Gehäuses angeordneten Filtervorrichtung, die den Behandlungsraum in mindestens zwei Teilräume unterteilt und von dem Wasser auf dem Wege zwischen dem Einlaß und dem Auslaß des Gehäuses durchtreten werden muß;
c) einer UV-Lampe, die innerhalb des Gehäuses angeordnet ist und deren Strahlung auf das durchströmende Wasser und die Filtervorrichtung gerichtet ist,
**dadurch gekennzeichnet, daß**
d) das Gehäuse (2, 3, 4) so dimensioniert ist, daß die Einrichtung (1) in den Wasserkanal einer sanitären Armatur einsetzbar ist;
e) die Filtervorrichtung (50; 150; 250) ein für die UV-Strahlung durchlässiger Sinterkörper ist;
f) die Teilräume (51a, 51b; 151a, 151b; 251a, 251b) des Behandlungsraumes (19) in zwei Sätze unterteilt sind, von denen mindestens einer eine Mehrzahl von Teilräumen (51a, 51b; 151a, 151b; 251a, 251b) umfaßt;
g) die Teilräume (51a; 151a; 251a) des einen Satzes mit dem Einlaß (39) des Gehäuses (2, 3, 4) und die Teilräume (51b; 151b; 251) des anderen Satzes mit dem Auslaß (41) des Gehäuses (2, 3, 4) in Verbindung stehen,
wobei
h) die Teilräume (51a; 151a; 251a) des einen Satzes von den Teilräumen (51b; 151b; 251) des anderen Satzes durch filteraktive Bereiche der Filtervorrichtung (50; 150; 250) voneinander getrennt sind.

2. Einrichtung nach Anspruch 1, **dadurch gekennzeichnet,**
**daß** die Teilräume (151b; 251b) mindestens eines der beiden Sätze an einer Mantelfläche der Filtervorrichtung (150; 250) entlang geführt sind.

3. Einrichtung nach Anspruch 2, **dadurch gekennzeichnet,**
**daß** die Teilräume (151a) mindestens eines Satzes zwischen der äußeren Mantelfläche der Filtervorrichtung (150) und der Innenfläche des Gehäuses (102) ausgebildet sind.

4. Einrichtung nach Anspruch 2, **dadurch gekennzeichnet,**
**daß** die Teilräume (251a) mindestens eines Satzes zwischen einer inneren Mantelfläche der Filtervorrichtung (250) und dem Leuchtkörper (214) der UV-Lampe ausgebildet sind.

5. Einrichtung nach einem der vorhergehenden Ansprüche,
**dadurch gekennzeichnet, daß** die Teilräume (151b; 251b) mindestens eines Satzes als Durchgangsbohrungen der Filtervorrichtung (150; 250) ausgebildet sind.

6. Einrichtung nach einem der vorhergehenden Ansprüche,
**dadurch gekennzeichnet, daß** die Teilräume (51a, 51b; 151a, 151b; 251a, 251b) an gegenüberliegenden Enden jeweils durch eine Zwischenplatte (17, 42; 117, 142; 217, 242) begrenzt sind, wobei jede Zwischenplatte (17, 42; 117, 142; 217, 242) Durchtrittsöffnungen (57, 59; 157, 159; 257, 259) aufweist, die mit einem der beiden Sätze von Teilräumen (51a, 51b; 151a, 151b; 251a, 251b) in Verbindung stehen.

## Claims

1. Device for sterilising and filtering water which flows through a sanitary device, with
a) a housing which comprises an inlet and an outlet for the water;
b) a filtering apparatus which is disposed in a treatment space inside the housing, which apparatus divides the treatment space into at least two sub-spaces and through which water must pass on its way between the inlet and the outlet of the housing;
c) a UV lamp which is disposed inside the housing and the radiation of which is directed at the through-flowing water and the filtering apparatus,
**characterised in that**
d) the housing (2, 3, 4) is dimensioned such that the device (1) can be inserted in the water channel of a sanitary fitting;
e) the filtering apparatus (50; 150; 250) is a sintered compact which is transparent to UV radiation;
f) the sub-spaces (51a, 51b; 151a, 151b; 251a, 251b) of the treatment space (19) are divided into two sets, at least one of which comprises a plurality of sub-spaces (51a, 51b; 151a, 151b; 251a, 251b);
g) the sub-spaces (51a; 151a; 251a) of one set communicate with the inlet (39) of the housing (2, 3, 4), and the sub-spaces (51b; 151b; 251) of the other set communicate with the outlet (41) of the housing (2, 3, 4),
h) the sub-spaces (51a; 151a; 251a) of one set are separated from the sub-spaces (51b; 151b; 251) of the other set by filter-active regions of the filtering apparatus (50; 150; 250).

2. Device according to Claim 1, **characterised in that** the sub-spaces (151b; 251b) at least of one of the two sets extend along a circumferential surface of the filtering apparatus (150; 250).

3. Device according to Claim 2, **characterised in that** the sub-spaces (151a) at least of one set are formed between the outer circumferential surface of the filtering apparatus (150) and the inner surface of the housing (102).

4. Device according to Claim 2, **characterised in that** the sub-spaces (251a) at least of one set are formed between an inner circumferential surface of the filtering apparatus (250) and the luminous body (214) of the UV lamp.

5. Device according to any one of the preceding Claims, **characterised in that** the sub-spaces (151b; 251b) at least of one set are formed as through-bores in the filtering apparatus (150; 250).

6. Device according to any one of the preceding Claims, **characterised in that** the sub-spaces (51a, 51b; 151a, 151b; 251a, 251b) are in each case bounded at opposite ends by an intermediate plate (17, 42; 117, 142; 217, 242), wherein each intermediate plate (17, 42; 117, 142; 217, 242) comprises passage openings (57, 59; 157, 159; 257, 259) which communicate with one of the two sets of sub-spaces (51a, 51b; 151a, 151b; 251a, 251b).

## Revendications

1. Dispositif pour décontaminer et filtrer de l'eau traversant une installation sanitaire, comprenant
a) un boîtier présentant une entrée et une sortie d'eau ;
b) un dispositif de filtration placé dans un espace de traitement à l'intérieur du boîtier, qui divise l'espace de traitement en au moins deux compartiments et que l'eau doit traverser entre l'entrée et la sortie du boîtier ;
c) une lampe UV placée à l'intérieur du boîtier dont le rayonnement est dirigé vers l'eau qui circule et vers le dispositif de filtration,
**caractérisé en ce que** :
d) le boîtier (2, 3, 4) est dimensionné de manière à ce que le dispositif (1) puisse être logé dans la conduite d'eau d'une robinetterie sanitaire ;
e) le dispositif de filtration (50 ; 150 ; 250) est un corps fritté perméable au rayonnement UV ;
f) les compartiments (51a, 51b; 151a, 151b ; 251a, 251b) de l'espace de traitement (19) sont divisés en deux séries dont au moins l'une comprend une majorité de compartiments (51a, 51b ; 151a, 151b ; 251a, 251b) ;
g) les compartiments (51a ; 151a ; 251a) de l'une des séries communiquent avec l'entrée (39) du boîtier (2, 3, 4), et les compartiments (51b ; 151b ; 251b) de l'autre série communiquent avec la sortie (41) du boîtier (2, 3, 4),
sachant que
h) les compartiments (51a ; 151a ; 251a) de l'une des séries sont séparés des compartiments (51b ; 151b ; 251b) de l'autre série par des zones de filtration actives du dispositif de filtration (50 ; 150 ; 250).

2. Dispositif selon la revendication 1, **caractérisé en ce que** les compartiments (151b ; 251b) d'au moins l'une des deux séries sont guidés le long d'une surface latérale du dispositif de filtration (150 ; 250).

3. Dispositif selon la revendication 2, **caractérisé en ce que** les compartiments (151a) d'au moins une série sont réalisés entre la surface latérale extérieure du dispositif de filtration (150) et la surface intérieure du boîtier (102).

4. Dispositif selon la revendication 2, **caractérisé en ce que** les compartiments (251a) d'au moins une série sont réalisés entre une surface latérale intérieure du dispositif de filtration (250) et l'élément lumineux (214) de la lampe UV.

5. Dispositif selon l'une des revendications précédentes, **caractérisé en ce que** les compartiments (151b ; 251b) d'au moins une série sont réalisés sous forme de perçages de passage du dispositif de filtration (150 ; 250).

6. Dispositif selon l'une des revendications précédentes, **caractérisé en ce que** les compartiments (51a, 51b ; 151a, 151b ; 251a, 251b) sont chaque fois délimités à des extrémités opposées par une plaquette intercalaire (17, 42 ; 117, 142 ; 217, 242), sachant que chaque plaquette intercalaire (17, 42 ; 117, 142 ; 217, 242) comporte des orifices de passage (57, 59 ; 157, 159 ; 257, 259) qui communiquent avec l'une des deux séries de compartiments (51a, 51b ; 151a, 151b ; 251a, 251b).
